(19) **Europäisches Patentamt / European Patent Office / Office européen des brevets**

(11) **EP 1 747 117 B1**

(12) **EUROPÄISCHE PATENTSCHRIFT**

(45) Veröffentlichungstag und Bekanntmachung des Hinweises auf die Patenterteilung:
**29.10.2008 Patentblatt 2008/44**

(21) Anmeldenummer: **05742670.2**

(22) Anmeldetag: **11.05.2005**

(51) Int Cl.:
*B60R 5/04* (2006.01)　　*B60J 1/20* (2006.01)
*E06B 9/90* (2006.01)

(86) Internationale Anmeldenummer:
**PCT/EP2005/005061**

(87) Internationale Veröffentlichungsnummer:
**WO 2005/113292 (01.12.2005 Gazette 2005/48)**

(54) **ROLLOSYSTEM MIT GEBREMSTEM GLEITER**

BLIND SYSTEM COMPRISING A BRAKED SLIDING ELEMENT

SYSTEME DE STORE A ELEMENT COULISSANT FREINE

(84) Benannte Vertragsstaaten:
**AT BE BG CH CY CZ DE DK EE ES FI FR GB GR HU IE IS IT LI LT LU MC NL PL PT RO SE SI SK TR**

(30) Priorität: **17.05.2004 DE 102004024382**

(43) Veröffentlichungstag der Anmeldung:
**31.01.2007 Patentblatt 2007/05**

(73) Patentinhaber: **Webasto AG**
**82131 Stockdorf (DE)**

(72) Erfinder:
• **EISELT, Manuel**
**83026 Rosenheim (DE)**
• **ELBS, Norbert**
**80797 München (DE)**

(74) Vertreter: **Schwan - Schwan - Schorer Patentanwälte**
**European Patent Attorneys**
**Bauerstrasse 22**
**80796 München (DE)**

(56) Entgegenhaltungen:
WO-A-94/13923　　　DE-U1- 8 717 270
DE-U1- 29 610 570　　US-A- 529 179
US-A- 776 048

## Beschreibung

Die vorliegende Erfindung betrifft ein Rollosystem mit gebremstem Gleiter gemäß dem Oberbegriff von Anspruch 1.

Bisherige manuelle Rollos mit den Stellungen vollständig geöffnet und vollständig geschlossen, wie beispielsweise Kofferraumabdeckungen bei Kombifahrzeugen, beinhalten häufig eine vorgespannte Wickelwelle, welche auf das ausgezogenen Rollo eine Rückstellkraft wirken lässt. Damit wird erreicht, dass beim Freigeben des aufgespannten Rollos in der Schließstellung das anschließende Aufwickeln des Rollos durch die vorgespannte Wickelwelle automatisch ausgeführt wird. Wenn solch ein vorgespanntes Rollo jedoch keine Bremseinrichtung aufweist, kann das Rollo nach dem Lösen aus der Schließstellung zurückschnalzen und dabei Anbauteile beschädigen oder selbst Schaden nehmen, sofern nicht besondere Sicherheitsmaßnahmen (die wiederum zusätzliche Kosten, Bauraum und Gewicht bedeuten) berücksichtigt werden. Externe Bremsen, wie beispielsweise Silikonbremsen sind zwar denkbar, wirken aber in beide Richtungen, wodurch sich auch die Kraft erhöht, die zum Ausziehen des Rollos eingesetzt werden muss. Andere Systeme zum Bremsen eines vorgespannten Rollos können dazu ausgelegt sein, das Rollo in der Position zu fixieren, in der ein Bediener einen entsprechenden Griff am Rollo loslässt.

Die DE 102 45 929 A1 beschreibt eine Baugruppe bestehend aus mindestens einer Führungsschiene und einem Schlitten, die vorzugsweise bei einem Sonnenschutzrollo in einem Kraftfahrzeug eingesetzt werden kann. Die Baugruppe beinhaltet dabei einen Schlitten, welcher ein Bremselement aufweist, das mit der Bremsfläche der Führungsschiene zusammenwirken kann, wobei der Schlitten mindestens eine Feder aufweist, die den Schlitten so beaufschlagt, dass das Bremselement gegen die Bremsfläche gedrückt wird. Somit ist gewährleistet, dass der Schlitten in der Führungsschiene in der jeweiligen Position verbleibt. Der Schlitten weist ferner eine Kippkante auf, und beispielsweise durch Ziehen an einem Griff des Rollos wird der Schlitten entgegen der Wirkung der Feder um die Kippkante geschwenkt, wodurch das Bremselement sich von der Bremsfläche löst und der Schlitten somit innerhalb der Führungsschiene verschoben werden kann. Sobald der Bediener den Schlitten nicht mehr weiter in der Führungsschiene verschiebt, wird er von der Feder wieder in seine Ausgangsstellung zurückgedrückt und arretiert.

Die DE 102 48 958 A1 offenbart ebenfalls eine Baugruppe, welche mindestens eine Führungsschiene und einen Schlitten insbesondere für ein Sonnenschutzrollo in einem Kraftfahrzeug beinhaltet. Auch in diesem Fall weist der Schlitten wiederum mindestens ein Bremselement auf, welches in eine Bremsnut der Führungsschiene eingreifen kann, um den Schlitten in der Führungsschiene zu arretieren, wenn der Bediener das Rollo loslässt. Dabei weist der Schlitten eine Drehachse und ein von der Drehachse beabstandetes Abstützelement auf, welches aufgrund seiner Federwirkung das Bremselement in die Bremsnut drückt. Wie bei der DE 102 45 929 A1 ergibt sich auch hier somit ein Rollo, bei welchem durch Betätigen eines Griffes von einem Bediener und dem dadurch bewirkten Lösen des Bremselements von der Führungsschiene ein Verschieben des Rollos ermöglicht wird und andererseits beim Loslassen des Griffs das Rollo in der jeweiligen Position sofort fixiert wird.

Die WO 94/13923 A offenbart ein Rollosystem mit einem Zugspiegel zur Betätigung des Rollos. Der Zugspiegel ist mittels seitlichen Gleitern in einer Führungsschiene geführt, wobei die Gleiter jeweils eine Bremsfläche aufweisen, welche beim Loslassen eines Bedienelements am Zugspiegel mit den Führungsschienen so in Bremswirkung treten, dass die Rollobahn in der entsprechenden Auszugsposition fixiert wird.

Es ist Aufgabe der vorliegenden Erfindung, ein Rollosystem der eingangs genannten Art zu schaffen, bei welchem beim Lösen eines vorgespannten, abgewickelten Rollos in der Verschlussposition das Rollo gebremst aufgewickelt wird. Es ist ferner Aufgabe der vorliegenden Erfindung eine entsprechende Lösung anzubieten, die kostengünstig hergestellt werden kann und dem Kunden einen hohen Bedienungskomfort bietet.

Diese Aufgabe wird bei einem Fahrzeug-Rollosystem mit einem gegen eine Rückstellkraft einer Wickelrolle aufgespannten Rollo und mindestens einem Zugspiegel, wobei der Zugspiegel einen Griff zur Betätigung des Rollos und seitlich mindestens je einen Gleiter beinhaltet, der in einer parallel zur Schließrichtung des Rollos verlaufenden Führungsschiene verschiebbar gelagert ist und dem mindestens eine Bremsfläche zugeordnet ist, erfindungsgemäß dadurch gelöst, dass die Gleiter so gestaltet sind, dass beim Loslassen des Griffs durch die Rückstellkraft der Wickelrolle die Bremsflächen der Gleiter zur Führungsschiene hin verlagert werden und mit mindestens einer Gegenfläche der Führungsschiene in Bremswirkung treten. Die Rückstellkraft des Rollos ist dabei größer als die Bremswirkung des mindestens einen Gleiters. Da bei dieser erfindungsgemäßen Lösung die Rückstellkraft des Rollos selbst, d.h. der Wickelrolle, die Bremsfläche verlagert, entfällt beispielsweise der Einsatz von zusätzlichen Federelementen. Ein Bediener des Rollos kann somit durch Ziehen an dem Griff das Rollo abwickeln und sobald das Rollo komplett abgewickelt ist, dieses in geeigneter Weise fixieren. Zum Aufwickeln des Rollos wird das Rollo gelöst und anschließend kann der Bediener den Griff einfach freigeben. Durch die Bremswirkung des Gleiters mit der Führungsschiene wird das Rollo dann gebremst aufgewickelt, wodurch ein Zurückschnalzen des vorgespannten Rollos und die daraus resultierenden, oben beschriebenen Probleme verhindert werden.

Weitere bevorzugte Ausgestaltungen der Erfindung ergeben sich aus den Unteransprüchen.

In einer ersten bevorzugten Ausführungsform der Erfindung weist der Gleiter eine Drehachse senkrecht zur Schließrichtung des Rollos auf, um die der Gleiter durch die Rückstellkraft des Rollos verkippt wird, wodurch, wenn das Rollo zum Aufwickeln freigegeben ist, die Bremsfläche des Gleiters gegen die Gegenfläche der Führungsschiene gedrückt wird, um mit ihr in Bremswirkung zu treten. Durch entsprechende Gestaltung der einzelnen Komponenten des Rollosystems lässt sich hierbei die durch die Bremsfläche erzeugte Bremskraft einstellen. Insbesondere kann bei dieser Ausführungsform die Bremskraft durch Wahl des Reibkoeffizienten der Bremsfläche sowie des Hebelverhältnisses am Gleiter eingestellt werden. In einer besonders bevorzugten Ausführungsform dieser Erfindung ist dabei die Drehachse des Gleiters parallel zu der Wickelrolle, auf die das Rollo aufgewickelt ist. Weiterhin kann der Gleiter mindestens zwei Bremsflächen aufweisen, die diametral zur Drehachse des Gleiters angeordnet sind und bei einer Verkippung des Gleiters jeweils mit zwei gegenüberliegenden Flächen der Führungsschiene in Bremswirkung treten.

Während das Rollosystem so gestaltet sein kann, dass die Bremsfläche mindestens zum Teil von der in der Führungsschiene geführten Gleitfläche des Gleiters gebildet wird, kann in alternativen Ausführungsformen die Führungsschiene eine Führungsbahn aufweisen, in welcher der Gleiter verschiebbar gelagert ist, wobei die Gegenfläche der Führungsschiene, mit der die Bremsfläche in Bremswirkung tritt, außerhalb der Führungsbahn angeordnet ist. Da im letzteren Fall die dem Gleiter zugeordnete Bremsfläche und die Gleitfläche des Gleiters in unterschiedlichen Bahnen der Führungsschiene laufen, können im Gleitkanal die Reibung herabsetzende Mittel, wie z.B. Gleitfett, eingesetzt werden, ohne dass hierdurch die Bremswirkung der Bremsfläche beeinträchtigt wird.

In einer alternativen, bevorzugten Ausführungsform der Erfindung weist der Gleiter einen Halter und eine Gleitkappe mit mindestens einer Bremsfläche auf, wobei der Halter mit dem Rollo in Verbindung steht und die Gleitkappe auf dem Halter parallel zur Ausziehrichtung des Rollos verschiebbar gelagert ist. Halter und Gleitkappe werden dann, wenn das Rollo zum Abwickeln freigegeben wird, durch die Rückstellkraft des Rollos quer zur Verschieberichtung des Rollos entlang mindestens einer gemeinsamen Gleitfläche gegeneinander verschoben, wodurch wiederum die Bremsfläche gegen die Gegenfläche der Führungsschiene gedrückt wird und mit ihr in Bremswirkung tritt.

In einer bevorzugten Ausführungsform dieser Alternative wird die gemeinsame Gleitfläche aus mindestens einer schrägen Flanke des Halters und mindestens einer schrägen Flanke der Gleitkappe gebildet und besteht im wesentlichen aus ebenen Einzelflächen, die mit der Verschieberichtung des Rollos einen Winkel zwischen 10° und 80° bildet oder, noch besser, zwischen 30° und 60°. Damit wird die relative Bewegung des Halters gegen die Gleitkappe parallel zur Ausziehrichtung des Rollos teilweise in eine Bewegung quer zur Ausziehrichtung umgewandelt. Die schrägen Flanken des Halters sind dabei vorzugsweise in Richtung der Wickelrolle, die schrägen Flanken der Gleitkappe hingegen in Ausziehrichtung des Rollos ausgerichtet.

In einer weitem bevorzugten Ausführungsform dieser Alternative weisen der Halter und die Gleitkappe entlang der Verschieberichtung des Rollos eine sägezahnartige Fläche auf, wobei die Zähne von Halter und Gleitkappe jeweils durch im wesentlichen senkrechte Flanken sowie durch die schrägen Flanken gebildet werden. Damit ist die oben beschriebene Struktur mit schrägen Flächen periodisch wiederholt.

Bei Ausführungsformen mit Halter und Gleitkappe kann der Halter in die Gleitkappe eingefügt sein, wobei der Halter beim Verschieben beider gegeneinander die Gleitkappe elastisch unter einem Winkel zur Verschieberichtung soweit nach außen verformt, dass die Bremsfläche des Gleiters mit der Führungsschiene in Bremswirkung tritt. Je nach Ausgestaltung der Führungsschiene kann dies horizontal, vertikal, und einem Winkel oder auch radial erfolgen.

Die Bremsflächen des Gleiters können in die Gleiter integriert sein oder als separat angebrachte Elemente mit hoher Reibungszahl ausgebildet sein.

Der Gleiter kann generell mehrere Gleitflächen aufweisen, die mit mindestens zwei Gegenflächen der Führungsschiene in Bremswirkung treten, welche sich auf entgegengesetzten Seiten des Gleiters befinden. Bei einer u-förmigen Führungsschiene kann somit der Gleiter innerhalb der beiden Schenkel liegen und mit beiden in Bremswirkung treten.

Das Rollosystem ist bei bevorzugten Ausführungsformen so ausgelegt, dass durch Ziehen am Griff in Schließrichtung diese Zugkraft der Rückstellkraft des Rollos entgegenwirkt und so die mindestens eine Bremsfläche von der Führungsschiene weg verlagert, wodurch die Bremswirkung reduziert wird. Damit wird der Kraftaufwand zum Abrollen des Rollos reduziert.

Der Griff kann bei Ausführungsformen, bei denen der Gleiter verkippt wird, beim Ziehen durch einen Bediener ein Drehmoment auf den Gleiter bewirken, welches dem Drehmoment durch die Rückstellkraft des Rollos entgegengesetzt ist. Bei Ausführungsformen mit Gleitkappe und Halter ist der Griff vorzugsweise mit der Gleitkappe verbunden, um beide Elemente an der Stelle der gemeinsamen Gleitfläche wieder voneinander zu trennen.

Bei einer weiteren Ausführungsform der Erfindung besteht der Gleiter aus einem Gleitkörper, der mit dem Rollo verbunden ist, und aus einem separaten Bremskörper, der zwischen Gleitkörper und Rollo angeordnet ist. Der Gleitkörper weist hierbei einen keilförmigen Fortsatz auf, der in Richtung des Bremskörpers zeigt, und der Bremskörper hat einen Einschnitt, auf den der Fortsatz beim Aufrollen des Rollos auftrifft, sobald der Bediener das Rollo zum Aufrollen freigibt. Der Bremskörper wird dann durch den keilförmigen Fortsatz des Gleitkörpers auseinandergespreizt und kommt mit der Führungsschiene in Bremswirkung. Der Gleitkörper und der Bremskörper können dabei über einen Mitnehmer so miteinander verbunden sein, dass sich der Bremskörper bis zu einem Anschlag des Mitnehmers parallel zur Bewegungsrichtung des Gleiters vom Gleitkörper weg bewegen lässt.

Bei allen Varianten führt das Betätigen des Griffs zum Ausziehen des Rollos dazu, dass die Bremskraft des Gleiters reduziert und das Rollo freigegeben wird.

Bevorzugte Ausführungsbeispiele der vorliegenden Erfindung werden nachstehend unter Bezugnahme auf die Zeichnungen näher erläutert. Hierbei zeigen:

Fig. 1     eine Seitenansicht auf ein erfindungsgemäßes Rollosystem für ein Fahrzeug, bei der ein Gleiter sich nach rechts bewegt und der ihm zugeordnete Rollo aufgewickelt wird, wobei der Schlitten in der Führungsschiene verkippt ist;

Fig. 2     den Gleiter aus Fig. 1, jedoch in einer Situation, in der das Rollo durch Ziehen an einem Griff abgewickelt wird;

Fig. 3     eine alternative Ausführung der Erfindung mit einem Gleiter, der aus einem Halter und einer Gleitkappe besteht, wobei das Rollo im Bild nach links abgewickelt wird;

Fig.4     den erfindungsgemäßen Gleiter aus Fig. 3, der hier in der Phase des Aufwickelns des Rollos nach rechts gezeigt ist, wodurch der Gleiter wiederum in Bremswirkung mit der Führungsschiene tritt;

Fig. 5     den erfindungsgemäßen Gleiter der Fign. 3 und 4 in einer perspektivischen Ansicht; und

Fig. 6 und 7     eine weitere alternative Ausführung der Erfindung, bei der ein Gleiter aus einem Gleitkörper und einem Bremskörper besteht und die Bremswirkung durch das Auseinanderspreizen des Bremskörpers durch den Gleitkörper entsteht.

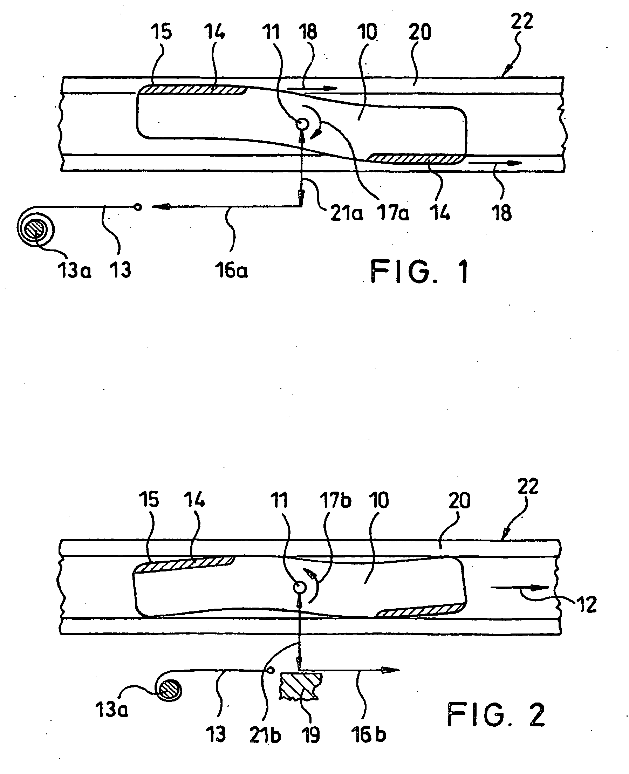

Fig. 1 zeigt einen erfindungsgemäßen Gleiter 10, der mittels einer Führungsschiene 22 geführt wird, welche eine Führungsnut 20 aufweist, die den Gleiter quer zur Verschieberichtung eines Rollos 13 fixiert. Gleiter 10 und Rollo 13 sind mittels eines nicht hier dargestellten Zugspriegels in Verbindung und das Rollo wird von einer vorgespannten Wickelwelle 13a auf- oder abgewickelt. Der Gleiter 10 weist zwei Bremsflächen 15 auf, mit denen er mit der Führungsschiene 22 in Bremswirkung steht. Diese Bremsflächen können integral an dem Gleiter 10 ausgebildet sein, oder, wie dies in Fig. 1 gezeigt ist, durch separate Bremselemente 14 ausgebildet sein, welche durch eine hohe Reibungszahl die Bremswirkung noch verstärken. Der Gleiter 10 selbst kann beispielsweise ein Kunststoffteil sein, welches mittels eines Spritzgussverfahrens hergestellt ist, und die Bremselemente 14 können z.B. an den Gleiter angespritzt sein. Die Bremswirkung wird erzielt, indem durch eine Rückstellkraft 16a des Rollos 13 nach links über einen Hebelarm 21a ein Drehmoment 17a um eine Drehachse 11 auf den Gleiter 10 wirkt. Da in Fig. 1 nur das Drehmoment 17a des Rollos 13 wirkt und nicht etwa ein zusätzliches Drehmoment oder eine zusätzliche Kraft durch einen Bediener, wird der Gleiter 10 somit in der Bildebene im Uhrzeigersinn verkippt und die Bremselemente 14 bzw. die Bremsflächen 15 werden gegen die Gegenflächen der Führungsschiene 22 gepresst (Fig. 1 ist dabei eine schematische Darstellung - in Wirklichkeit werden die Bremselemente 14 nicht in die Führungsschiene 22 hineingedrückt sondern elastisch komprimiert). Der Gleiter 10 ist hierbei so geformt (näherungsweise S-förmig), dass durch diese Verkippung eine größere Auflagefläche des Gleiters auf der Führungsschiene 22 resultiert. Somit entstehen Bremskräfte 18, die der Rückstellkraft 16a des Rollos 13 entgegenwirken und damit entgegengesetzt zur Aufwickelrichtung des Rollos sind. Die Bremskraft des Gleiters kann dabei beispielsweise über die Länge des Hebelarms 21A des Rollos 13, die Rückstellkraft 16a des Rollos oder die Reibungszahl der Bremsflächen 15 so eingestellt werden, dass beim Loslassen des Rollos dieser in einer gedämpften, kontrollierten Bewegung aufgewickelt wird, und sich der Gleiter 10 somit im Bild nach links bewegt.

Fig. 2 zeigt den Gleiter 10 aus Fig. 1 in eine Position verdreht, wie sie beim Ausziehen des Rollos erreicht wird. Der Gleiter 10 ist dabei über einen Hebelarm 21 b mit einem Griff 19 verbunden, mittels dessen der Bediener das Rollo 13 abwickeln kann, um beispielsweise einen Kofferraum eines Kombifahrzeuges abzudecken. Die Abwickelrichtung des Rollos 13 und damit die Bewegungsrichtung des Gleiters 10 erfolgt hierbei nach rechts entlang der Schließrichtung 12 des Rollos. Wie in Fig. 2 gezeigt ist, wirkt durch die Zugkraft 16b (der Pfeil soll hier die Richtung anzeigen) am Griff 19 ein Drehmoment 17b auf den Gleiter 10, wodurch dieser um seine Drehachse 11 in einer Richtung gegen den Uhrzeigersinn verkippt wird. Durch dieses Verkippen werden die Bremselemente 14 mit den Bremsflächen 15 von der Führungsschiene 22 gelöst und treten somit nicht mehr in Bremswirkung mit der Führungsschiene. Der Gleiter 10 tritt vielmehr mit einer reduzierter Fläche mit geringeren Reibungszahlen in Kontakt mit der Führungsschiene 22, weshalb die Bremskraft gegenüber der Zugkraft 16b am Griff 19 gering ist. Als Resultat kann der Bediener somit den Gleiter 10 zusammen mit dem daran befestigten Rollo 13 leicht und bequem in Schließrichtung 12 bewegen.

Das Rollo 13 kann nun beispielsweise mittels des oben erwähnten Zugspriegels beim Erreichen der Endposition des vollständig ausgefahrenen Rollos in eine Halterung eingehakt werden. Sobald das Rollo 13 aus einer solchen Halterung wieder ausgehakt ist und der Bediener in einer Position gemäß der Fig. 2 den Griff 19 loslässt, verschwenkt die Rückstellkraft 16a des Rollos den Gleiter 10 in eine Position gemäß Fig. 1, wodurch die Bremselemente 14 mit ihren Bremsflächen 15 mit der Führungsschiene 22 in Bremswirkung treten und das Rollo gebremst aufgewickelt wird.

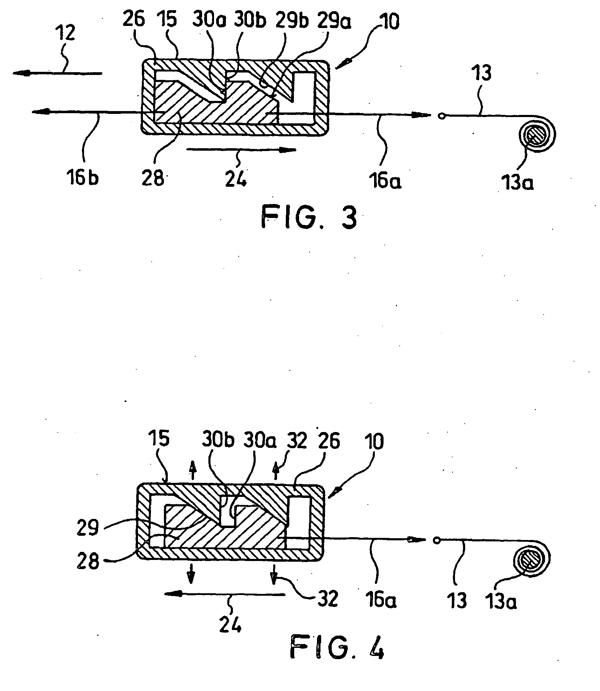

Fig. 3 zeigt eine alternative Ausführungsform der Erfindung, bei der ein Gleiter 10 zweiteilig hergestellt ist und einen Halter 28 und eine Gleitkappe 26 aufweist. Der Halter 28, der mit einem Rollo 13 über einen Zugspriegel in Verbindung steht, ist dabei verschiebbar gegenüber der Gleitkappe 26 gelagert und ist in diese eingeführt bzw. eingesteckt. Halter 28 und Gleitkappe 26 weisen in dieser Ansicht von der Seite auf den Gleiter 10 jeweils einen sägezahnartigen Bereich auf, wobei die "Zähne" durch schräge Flanken 29a, bzw. 29b sowie senkrechte Flächen 30a und 30b ausgebildet sind. In Fig. 3 ist dabei die Situation dargestellt, wenn ein Bediener das Rollo 13 in Schließrichtung 12 von einer Wickelwelle 13a nach links abwickelt, indem er an einem (hier nicht dargestellten) Griff zieht und eine Zugkraft 16b auf den mit dem Griff verbundenen Halter 28 wirkt. Der Halter 28 wird dadurch so innerhalb der Gleitkappe 26 verschoben, dass die senkrechten Flächen 30a und 30b aufeinander zu liegen kommen. Die Gleitkappe 26 ist wiederum in hier nicht dargestellten Führungsschienen verschiebbar gelagert und so dimensioniert, dass sie in der in Fig. 3 dargestellten Situation ohne große Reibung mit der Führungsschiene entlang der Schließrichtung 12 verschoben werden kann. Die Rückstellkraft 16a des Rollos bzw. der vorgespannten Wickelwelle 13a (Richtung hier wiederum als Pfeil dargestellt) wirkt der Zugkraft 16b durch den Bediener entgegen.

In Fig. 4 wird der Gleiter aus Fig. 3 nach rechts verschoben, was bedeutet, dass ein mit dem Halter 28 verbundenes Rollo 13 durch die Rückstellkraft 16a des Rollos nach rechts bewegt wird. Somit wird das Rollo 13, nachdem ein Bediener ihn freigegeben hat, durch die Vorspannung der Wickelwelle 13a aufgerollt, um beispielsweise den Kofferraum, den er zuvor abgedeckt hat, freizugeben. Die Rückstellkraft 16a des Rollos bewirkt in diesem Fall, dass die Gleitkappe 26 durch eine immer existierende Restreibung mit der Führungsschiene relativ zum Halter 28 entlang einer Richtung 24 verschoben wird, wodurch die schrägen Flanken 29a bzw. 29b von Halter 28 bzw. Gleitkappe 26 aus Fig. 3 nun direkt aufeinander liegen und eine gemeinsame Gleitfläche 29 ausbilden. Da diese Gleitfläche 29 schräg zur Rückstellkraft 16a des Rollos 13 und zum gleichgerichteten Verschiebeweg des Rollos liegt, führt bei jeder weiteren Verschiebung die Kraftwirkung durch die Rückstellkraft 16a auf den Halter 28 zu Querkräften 32 zwischen dem Halter und der Gleitkappe 26. Diese Querkräfte 32 wirken senkrecht zur Rückstellkraft 16a des Rollos und somit quer zur Verschieberichtung desselben. Da die Gleitkappe 26 aus elastischem Material ausgeformt ist, führen diese Querkräfte 32 dazu, dass der Halter 28 die Gleitkappe 29 entlang der Querkräfte 32 etwas in Richtung der Führungsschiene aufbiegt, wodurch Bremsflächen 15 der Gleitkappe wiederum mit (hier nicht dargestellten) Gegenflächen der Führungsschiene in Bremswirkung gebracht werden. Alternativ kann auch der Halter 28 elastisch und / oder der Gleiter 10 insgesamt symmetrisch geformt sein. Damit wird eine Bremswirkung auf beiden Seiten des Gleiters 10 erzielt. Auch bei diesen gezeigten Ausführungsformen mit Halter 28 und Gleitkappe 26 ist somit gewährleistet, dass der Gleiter 10 beim Aufwickeln des Rollos, also wenn ein Bediener das Rollo 13 freigibt, durch die Rückstellkraft 16a des Rollos nach rechts bewegt wird, jedoch kein unkontrolliertes Zurückschnalzen auftritt. Stattdessen findet ein Abbremsen und damit eine gedämpfte Bewegung des Rollos 13 statt.

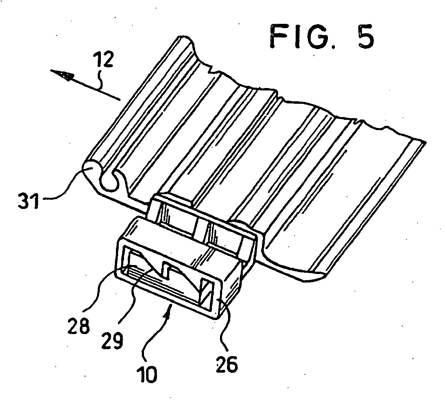

In Fig. 5 ist der Gleiter 10 der Fign. 3 und 4 nochmals in einer perspektivischen Ansicht abgebildet, wobei neben dem Halter 28 und der Gleitkappe 26 auch ein Zugspriegel 31 des Rollos gezeigt ist. Dieser steht einerseits mit dem Halter 28 und andererseits mit dem freien Ende des Rollos in Verbindung. Somit kann ein Bediener den Zugspriegel 31 in Schließrichtung 12 bewegen und damit das Rollo abwickeln, wodurch beispielsweise ein Kofferraum abgedeckt werden kann. Da bei dieser Bewegung wie bei allen Ausführungsformen der Erfindung die Reibung zwischen Gleiter 10 und Führungsschienen minimal ist, geschieht das Ausziehen mit geringem Kraftaufwand. Andererseits ist nach dem Loslassen des Zugspriegels 31 bzw. eines mit ihm verbundenen Griffs durch die oben beschriebene Wechselwirkung der Rückstellkraft 16a des Rollos einerseits und der entgegengesetzten Bremswirkung durch den Gleiter 10 andererseits ein kontrolliertes, gedämpftes Gleiten des Zugspriegels 31 entgegengesetzt zur Schließrichtung 12 gewährleistet.

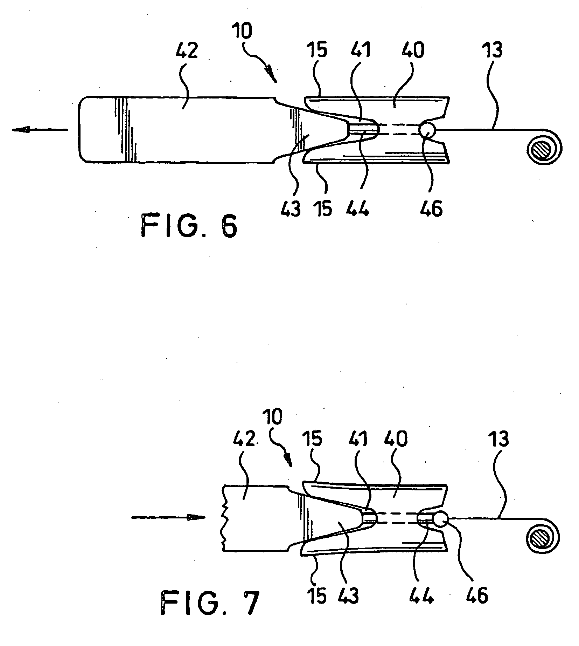

Fig. 6 und 7 zeigen eine weitere alternative Ausführungsform der Erfindung, bei der ein Gleiter 10 aus einem Gleitkörper 42 und einem Bremskörper 40 besteht. Beide Teile sind mittels eines Mitnehmers 44 so verschiebbar miteinander verbunden, dass der Gleitkörper 40 entlang der gemeinsamen Achse vom Bremskörper 42 weg nach links bewegt werden kann, bis er mittels eines Anschlags 46 des Mitnehmers den Bremskörper mitzieht. Dieser Bewegungsablauf geschieht dann, wenn ein Bediener das Rollo 13 ausrollt, indem er an einem (hier nicht gezeigten) Griff, der mit dem Gleiter 10 verbunden ist, diesen wie in der Fig. 6 gezeigt nach links bewegt. Das Rollo 13 ist mittels des Mitnehmers 44 am Gleitkörper 42 befestigt und wird ebenfalls vom Gleitkörper mitgezogen.

Bei der Freigabe des Rollos 13 zum Aufwickeln zieht das Rollo den Gleiter 10 wie in Fig. 7 gezeigt nach rechts. Dabei wird durch die Rückstellkraft des Rollos 13 ein keilförmiger Fortsatz 43 des Gleitkörpers 42 in einen Einschnitt 41 des Bremskörpers 40 hineingezogen, so dass der Bremskörper elastisch auseinander gespreizt wird. Durch das Auseinanderspreizen kommen wiederum Bremsflächen 15 mit einer Führungsschiene (hier nicht gezeigt) in Bremswirkung, um ein unkontrolliertes Zurückschnalzen das Rollos 13 zu vermeiden.

Bei einer weiteren alternativen Ausführungsform des erfindungsgemäßen Rollosystems ist ein Zugspriegel über seitliche Gleiter in einer seitlich der Dachöffnung angeordneten Führungsschiene geführt. In der Führungsschiene ist eine Führungsbahn vorgesehen, in der sich ein Gleitstift des Gleiters abstützt. Der Gleiter bildet gemeinsam mit dem über die Führungsschiene nach ober hinaus verlängerten Führungsspiegel ein Hebelelement mit einem in Auszugrichtung des Rollos nach vorne weisenden ersten Hebelarm und einem zweiten, nach oben weisenden Hebelarm, an dessen oberen Ende die Rollobahn befestigt ist.

Der vordere Hebelarm des Gleiters trägt ein Bremselement, welches beim Verkippen des Zugspriegels mit einer Gegenfläche der Führungsschiene in Eingriff tritt. Wenn ein Bediener das Rollo durch Betätigung eines an dem Zugspriegel vorgesehenen Griffs nach vorne zieht, um die Rollobahn abzuwickeln, wird hierbei der Zugspriegel und damit der Gleiter gegen die Rückstellkraft $F_S$ der Wickelrolle nach vorne verkippt. Wird der Griff losgelassen, so wird der Gleiter durch die Rückstellkraft Fs nach hinten verkippt, sodass sich das Bremselement gegen die Führungsschiene anlegt. Die von der Bremsfläche erzeugte Brems- oder Reibungskraft $F_R$ errechnet sich hierbei aus der stoffabhängigen Reibungszahl $\mu$ und der senkrecht auf die Gegenfläche wirkenden Normalkraft $F_N$:

$$F_R = \mu \cdot F_N.$$

Hierbei läßt sich die Normalkraft $F_N$ wiederum ausgehend vom Hebelgesetz aus der Rückstellkraft des Rollos $F_S$ berechnen. Hierbei gilt für einen Gleiter mit einem in Auszugrichtung des Rollos nach vorne weisenden ersten Hebelarm der Länge L und einem zweiten, nach oben weisenden Hebelarm der Höhe h:

$$F_N \cdot L = F_S \cdot h$$

bzw.

$$F_N = \frac{h}{L} \cdot F_S$$

Für die durch die Bremsfläche erzeugte Reibungskraft gilt somit:

$$F_R = \mu \cdot \frac{h}{L} \cdot F_S$$

Durch geeignete geometrische Gestaltung des Gleiters und des Zugspriegels läßt sich somit unter Berücksichtigung des Reibungskoeffizienten der Bremsfläche mit Bezug auf das Material der Gegenfläche der Führungsschiene in einfacher Weise eine gewünschte Bremskraft einstellen. Insbesondere kann die Anordnung hierbei so getroffen sein, dass entweder für ein sanftes Zurückgleiten des Zugspriegels gesorgt ist, sobald das Rollo aus seiner vollständig die Dachöffnung verschließenden Stellung gelöst wird.

Bei Ausführungsformen, bei welchen mittels der Bremsfläche für ein sanftes Zurückgleiten des Rollos in seine vollständig aufgewickelte Stellung gesorgt werden soll, kann hierbei durch Wahl des Hebelverhältnisses unter Berücksichtigung des Reibungskoeffizienten die Öffnungs- oder Aufwickelgeschwindigkeit des Rollos festgelegt werden. Bei einem Gleiter, der über den Gleitstift in der Führungsbahn der Führungsschiene abgestützt ist, können die Gleitfläche des Gleiters und die Bremsfläche des Gleiters in unterschiedlichen Führungsbahnen der Führungsschiene laufen. Im Bereich des Gleitstifts eingesetzte Gleitmittel beeinträchtigen somit nicht die Bremswirkung der Gleitfläche. Es versteht sich, dass die Gleitflächen und Bremsflächen auch völlig getrennt voneinander angeordnet werden könnten, beispielsweise indem der Gleiter so gestaltet wird, dass das Bremselement von außen gegen die Führungsschiene angreift. Insbesondere, wenn kein Halten des Rollos in Zwischenstellungen bewirkt werden soll und die Bremsflächen dem sanften Zurückgleiten des Rollos dienen sollen, kann jedoch auch auf den separaten Führungskanal und den Gleitstift verzichtet werden, wobei der Gleiter dann so gestaltet werden könnte, dass dieser mit seiner Unterseite des Hebelarms sowie mit der Oberseite seines zentralen an den Führungsspiegel angreifenden Bereichs innerhalb der Führungsschiene geführt ist.

**Bezugszeichenliste**

| | |
|---|---|
| 10 | Gleiter |
| 11 | Drehachse |
| 12 | Schließrichtung |
| 13 | Rollo |
| 13a | Wickelwelle |
| 14 | Bremselement |

| 15 | Bremsfläche |
| 16a | Rückstellkraft Rollo |
| 16b | Zugkraft Griff |
| 17a | Drehmoment Rollo |
| 17b | Drehmoment Griff |
| 18 | Bremskraft |
| 19 | Griff |
| 20 | Führungsnut |
| 21a | Hebelarm Rollo |
| 21 b | Hebelarm Griff |
| 22 | Führungsschiene |
| 24 | Gleitkappenverschiebung |
| 26 | Gleitkappe |
| 28 | Halter |
| 29 | Gleitfläche |
| 29a, b | schräge Flanke |
| 30a, b | senkrechte Flanke |
| 31 | Zugspriegel |
| 32 | Querkräfte |
| 35 | Gleiter |
| 36 | Rollobahn |
| 37 | Griff |
| 38 | Gleitstift |
| 40 | Gleitkörper |
| 41 | Einschnitt |
| 42 | Bremskörper |
| 43 | Fortsatz |
| 44 | Mitnehmer |
| 46 | Anschlag |

**Patentansprüche**

1. Fahrzeug-Rollosystem mit einem gegen eine Rückstellkraft (16a) einer Wickelrolle (13a) aufgespannten Rollo (13) und mindestens einem Zugspriegel (31), wobei der Zugspriegel einen Griff (19) zur Betätigung des Rollos und seitlich mindestens je einen Gleiter (10) beinhaltet, der in einer parallel zur Schließrichtung (12) des Rollos verlaufenden Führungsschiene (22) verschiebbar gelagert ist und dem mindestens eine Bremsfläche (15) zugeordnet ist wobei der Gleiter (10) so gestaltet ist, dass beim Loslassen des Griffs (19) durch die Rückstellkraft der Wickelrolle (13a) die Bremsfläche (15) zur Führungsschiene (22) hin verlagert wird, wodurch sie mit mindestens einer Gegenfläche der Führungsschiene in Bremswirkung tritt, **dadurch gekennzeichnet, dass** die Rückstellkraft (16a) des Rollos (13) größer ist als die Bremswirkung des mindestens eines Gleiters (10).

2. Rollosystem gemäß Anspruch 1, **dadurch gekennzeichnet, dass** die mindestens eine Bremsfläche (15) des Gleiters (10) ein separat angebrachtes Element (14) mit hoher Reibungszahl ist.

3. Rollosystem gemäß einem der vorhergehenden Ansprüche, **dadurch gekennzeichnet, dass** der Gleiter (10) mehrere Bremsflächen (15) aufweist, die mit mindestens zwei Gegenflächen der Führungsschiene (22) in Bremswirkung treten, welche sich auf entgegengesetzten Seiten des Gleiters befinden.

4. Rollosystem gemäß einem der vorhergehenden Ansprüche, **dadurch gekennzeichnet, dass** das Rollosystem so ausgelegt ist, dass durch Ziehen am Griff (19) in Schließrichtung (12), wobei die dabei aufgebrachte Zugkraft (16b) der Rückstellkraft (16a) des Rollos entgegenwirkt, die mindestens eine Bremsfläche (15) von der Führungsschiene (22) weg verlagert wird, wodurch die Bremswirkung reduziert wird.

5. Rollosystem gemäß einem der vorhergehenden Ansprüche, **dadurch gekennzeichnet, dass** der Gleiter (10) eine Drehachse (11) senkrecht zur Schließrichtung (12) des Rollos (13) aufweist, um welche durch die Rückstellkraft (16a) des Rollos ein Drehmoment (17a) wirkt, wodurch, wenn das Rollo zum Aufwickeln freigegeben wird, die Bremsfläche (15) gegen die Gegenfläche der Führungsschiene (22) gedrückt wird und mit ihr in Bremswirkung tritt.

6. Rollosystem gemäß Anspruch 5, **dadurch gekennzeichnet, dass** die Drehachse (11) des Gleiters (10) parallel zur Wickelrolle (13a) ist, auf die das Rollo (13) aufgewickelt werden kann.

7. Rollosystem gemäß Anspruch 5 oder 6, **dadurch gekennzeichnet, dass** der Gleiter (10) mindestens zwei Bremsflächen (15) aufweist, welche diametral zur Drehachse (11) angeordnet sind.

8. Rollosystem gemäß den Ansprüchen 5 bis 7, **dadurch gekennzeichnet, dass** das Rollosystem so ausgelegt ist, dass durch das Ziehen am Griff (19) in Schließrichtung (12) ein Drehmoment (17b) auf den Gleiter (10) wirkt, welches dem Drehmoment (17a) durch die Rückstellkraft (16a) des Rollos (13) entgegenwirkt.

9. Rollosystem gemäß einem der vorhergehenden Ansprüche, **dadurch gekennzeichnet, dass** die Bremsfläche (15) mindestens zum Teil von der in der Führungsschiene (22) geführten Gleitfläche des Gleiters (10) gebildet wird.

10. Rollosystem gemäß einem der Ansprüchen 1 bis 8, **dadurch gekennzeichnet, dass** die Führungsschiene (22) eine Führungsbahn aufweist, in welcher der Gleiter (10) verschiebbar gelagert ist, und die Gegenfläche der Führungsschiene, mit der die Bremsfläche (15) in Bremswirkung tritt, außerhalb der Führungsbahn angeordnet ist.

11. Rollosystem gemäß einem der Ansprüche 1 bis 4, **dadurch gekennzeichnet, dass** der Gleiter (10) einen Halter (28) und eine Gleitkappe (26) aufweist, wobei der Halter mit dem Rollo (13) in Verbindung steht und die Gleitkappe auf dem Halter parallel zur Ausziehrichtung des Rollos verschiebbar gelagert ist und die Gleitkappe an zumindest einer Seite, die der Führungsschiene (22) zugeordnet ist, die mindestens eine Bremsfläche (15) aufweist, wobei, wenn das Rollo zum Aufwickeln freigegeben wird, der Halter und die Gleitkappe durch die Rückstellkraft (16a) des Rollos quer zur Verschieberichtung des Rollos entlang mindestens einer gemeinsamen Gleitfläche (29) gegeneinander verschoben werden und **dadurch** die Bremsfläche (15) gegen die Gegenfläche der Führungsschiene (22) gedrückt wird und mit ihr in Bremswirkung tritt.

12. Rollosystem gemäß Anspruch 11, **dadurch gekennzeichnet, dass** die mindestens eine gemeinsame Gleitfläche (29) aus mindestens einer schrägen Flanke (29a) des Halters (28) und mindestens einer schrägen Flanke (29b) der Gleitkappe (26) gebildet wird und aus im wesentlichen ebenen Einzelflächen besteht, die mit der Verschieberichtung des Rollos (13) einen Winkel zwischen 10° und 80° bilden.

13. Rollosystem gemäß Anspruch 12, **dadurch gekennzeichnet, dass** die mindestens eine gemeinsame Gleitfläche (29) mit der Verschieberichtung des Rollos (13) einen Winkel zwischen 30° und 60° bildet.

14. Rollosystem gemäß Anspruch 12 oder 13, **dadurch gekennzeichnet, dass** die schrägen Flanken (29a) des Halters (28) in Richtung der Wickelrolle (13a) und die schrägen Flanken (29b) der Gleitkappe (26) in Ausziehrichtung des Rollos (13) orientiert sind.

15. Rollosystem gemäß einem der Ansprüche 12 bis 14, **dadurch gekennzeichnet, dass** der Halter (28) und die Gleitkappe (26) entlang der Verschieberichtung des Rollos (13) eine sägezahnartige Fläche aufweisen, wobei die Zähne von Halter und Gleitkappe jeweils durch im wesentlichen senkrechte Flanken (30a, b) sowie durch die schrägen Flanken (29a, b) gebildet werden.

16. Rollosystem gemäß einem der Ansprüche 1 bis 15, **dadurch gekennzeichnet, dass** der Halter (28) in die Gleitkappe (26) eingefügt ist und der Halter beim Verschieben beider gegeneinander die Gleitkappe elastisch und unter einem Winkel zur Verschieberichtung soweit nach außen verformt, sodass die Bremsfläche (15) des Gleiters (10), die auf der Gleitkappe angebracht ist, mit der Führungsschiene (22) in Bremswirkung tritt.

17. Rollosystem gemäß einem der Ansprüche 11 bis 16, **dadurch gekennzeichnet, dass** der Griff (19) mit der Gleitkappe (26) verbunden ist.

18. Rollosystem gemäß einem der Ansprüche 1 bis 4, **dadurch gekennzeichnet, dass** der Gleiter (10) aus einem Gleitkörper (42), der mit dem Rollo (13) verbunden ist, sowie einem separaten Bremskörper (40) besteht, der zwischen Gleitkörper und Rollo angeordnet ist, wobei der Bremskörper die mindestens eine Bremsfläche (15) trägt und der Gleitkörper (42) einen keilförmigen Fortsatz (43) hat, der in Richtung des Bremskörpers (40) weist, und der Bremskörper einen Einschnitt (41) aufweist, auf den der Fortsatz beim Aufrollen des Rollos auftrifft, wodurch der Bremskörper elastisch auseinandergespreizt wird und die zumindest eine Bremsfläche (15) mit der Führungsschiene in Bremswirkung tritt.

19. Rollosystem gemäß Anspruch 18, **dadurch gekennzeichnet, dass** der Gleitkörper und der Bremskörper über einen Mitnehmer (44) so verbunde sind, dass sich der Bremskörper bis zu einem Anschlag (46) des Mitnehmers parallel zur Bewegungsrichtung des Gleiters vom Gleitkörper weg bewegen lässt.

## Claims

1. Roller blind system for a vehicle comprising a roller blind (13), which is spread-out against the restoring force (16a) of a winding roller (13a), and at least one tie bar (31), wherein the tie bar comprises a handle (19) for operation of the roller blind and laterally at least one slider (10), which is slidably supported within a guide rail (20) extending parallel to the closing direction (12) of the roller blind and which comprises at least one breaking area (15), where the slider (10) is designed such that upon releasing the handle (19) the braking area (15) is displaced towards the guide rail (22) by the restoring force of the winding roller (13a), so as to come into braking engagement with at least one counter-surface of the guide rail, **characterized in that** the restoring force (16a) of the roller blind (13) exceeds the breaking effect of the at least one slider (10).

2. Roller blind system according to claim 1, **characterized in that** the at least one braking area (15) of the slider (10) is a separately mounted member (14) with a high coefficient of friction.

3. Roller blind system according to anyone of the preceding claims, **characterized in that** the slider (10) comprises a plurality of breaking areas (15), which come into frictional engagement with at least two counter-surfaces of the guide rail (22) which are arranged on opposite sides of the slider.

4. Roller blind system according to anyone of the preceding claims, **characterized in that** the roller blind system is designed such, that by pulling the handle (19) in the closing direction (12) where the thereby applied pulling force (16b) counteracts the restoring force (16a) of the roller blind, the at least one braking area (15) is displaced away from the guide rail (22), whereby the frictional engagement is reduced.

5. Roller blind system according anyone of the preceding claims, **characterized in that** the slider (10) has a rotational axis (11) perpendicular to the closing direction (12) of the roller blind (13) about which axis a torque (17a) acts due to the restoring force (16a) of the roller blind, such that the braking area (15) is pressed against the counter-surface of the guide rail (22) and comes into braking engagement therewith, when the roller blind is released to be coiled-up.

6. Roller blind system according to claim 5, **characterized in that** the rotational axis (11) of the slider (10) is parallel to the winding roller (13a) onto which the roller blind (13) can be coiled.

7. Roller blind system according to claim 5 or 6, **characterized in that** the slider (10) comprises at least two braking areas (15) that are arranged diametrically opposed with respect to the rotational axis (11).

8. Roller blind system according to anyone of claims 5 to 7, **characterized in that** the roller blind system is designed such that pulling the handle (19) in closing direction (12) applies a torque (17b) to the slider (10) that counteracts the torque (17a) due to the restoring force (16a) of the roller blind (13).

9. Roller blind system according to anyone of the preceding claims, **characterized in that** the breaking area (15) is composed at least partially by the sliding area of the slider (10) that is guided in the guide rail (22).

10. Roller blind system according to anyone of claims 1 to 8, **characterized in that** the guide rail (22) comprises a guide channel, in which the slider (10) is slidably supported and the counter-surface of the guide rail with which the braking area (15) comes into frictional engagement, is located outside of the guide channel.

11. Roller blind system according to anyone of claims 1 to 4, **characterized in that** the slider (10) comprises a holding member (28) and a sliding cap (26), wherein the holding member is connected to the roller blind (13) and the sliding cap is slidably supported on the holding member in a direction parallel to the opening direction of the roller blind, and the sliding cap at at least one side thereof, which is associated to the guide rail (22) comprises the at least one braking surface (15), wherein upon releasing the roller blind to be coiled-up, the holding member and the sliding cap are displaced relatively to each other in a direction transversal to the sliding direction of the roller blind along at least one common sliding surface (29), such that the braking area (15) is pressed against a counter-surface of the guide rail (22) and comes into braking engagement therewith.

12. Roller blind system according to claim 11, **characterized in that** the at least one common sliding surface (29) is defined by at least one slanted face (29a) of the holding member (28) and at least one slanted face (29b) of the sliding cap (26) and is comprised of individual surfaces that are substantially even and are arranged at an angle of between 10° and 80° to the sliding direction of the roller blind (13).

13. Roller blind system according to claim 12, **characterized in that** the at least one common sliding surface (29) provides an angle of between 30° and 60° with the sliding direction of the roller blind (13).

14. Roller blind system according to claim 12 or 13, **characterized in that** the slanted faces (29a) of the holding member (28) are oriented in the direction of the winding roller (13a) and the slanted face (29b) of the sliding cap (26) in the opening direction of the roller blind (13).

15. Roller blind system according to anyone of claims 12 to 14, **characterized in that** the holding member (28) and the sliding cap (26) comprise a saw-tooth-like surface along the sliding direction of the roller blind (13), wherein the teeth of the holding member and the sliding cap are defined by substantially vertical faces (30a, b) and by slanted faces (29a, b).

16. Roller blind system according to anyone of claims 11 to 15, **characterized in that** the holding member (28) is inserted into the gliding cap (26) and the holding member deforms the sliding cap elastically during a dislocation of both with respect to each other and with an angle with respect to the dislocation direction by an amount, such that the braking area (15) of the slider (10), which is located on the sliding cap, comes into braking engagement with the guide rail (22).

17. Roller blind system according to anyone of claims 11 to 16, **characterized in that** the handle (19) is in connection with the sliding cap (26).

18. Roller blind system according to anyone of claims 1 to 4, **characterized in that** the slider (10) consists of a sliding member (42) connected to the roller blind (13) and a separate breaking member (40), which is arranged between the sliding member and the roller blind, wherein the braking member carries the at least one braking area (15), and the sliding member (42) has a wedge-like extension (43) directed into the direction of the braking member (40), and wherein the braking member has an incision (41), which is engaged by the extension upon coiling-up the roller blind, so that the braking member is elastically spread-apart and the at least one braking surface (15) comes into braking engagement with the guide rail.

19. Roller blind system according to claim 18, **characterized in that** the sliding member and the braking member are connected via a driver (44), such that the braking member can be moved away from the sliding member in parallel to the moving direction of the slider up to a stop (46) of the driver.

**Revendications**

1. Système de store pour véhicules, comprenant un rideau (13) tendu en opposition à une force de rappel (16a) d'un arbre enrouleur (13a), et au moins un arceau de traction (31), ledit arceau de traction comportant une poignée (19) pour l'actionnement du rideau et, dans le sens latéral, au moins un élément coulissant respectif (10) monté à coulissement dans un rail de guidage (22) s'étendant parallèlement à la direction de fermeture (12) du rideau, et auquel est affectée au moins une surface de freinage (15), l'élément coulissant (10) étant conçu de façon telle que, lors du relâchement de la poignée (19), la surface de freinage (15) soit déplacée vers le rail de guidage (22) par la force de rappel de l'arbre enrouleur (13a), de sorte qu'elle entre en interaction de freinage avec au moins une surface complémentaire dudit rail de guidage, **caractérisé par le fait que** la force de rappel (16a) du rideau (13) est supérieure à l'effet de freinage de l'élément coulissant (10) prévu au minimum.

2. Système de store selon la revendication 1, **caractérisé par le fait que** la surface de freinage (15) de l'élément coulissant (10), prévue au minimum, est un élément (14) à coefficient de frottement élevé, implanté séparément.

3. Système de store selon l'une des revendications précédentes, **caractérisé par le fait que** l'élément coulissant (10) offre plusieurs surfaces de freinage (15) entrant en interaction de freinage avec au moins deux surfaces complémentaires du rail de guidage (22), qui sont situées sur des côtés opposés dudit élément coulissant.

4. Système de store selon l'une des revendications précédentes, **caractérisé par le fait que** ledit système de store est conçu de telle sorte que, par traction exercée sur la poignée (19) dans la direction de fermeture (12), la force de traction (16b) qui est alors appliquée contrecarrant la force de rappel (16a) du rideau, la surface de freinage (15) prévue au minimum soit éloignée du rail de guidage (22), en réduisant ainsi l'effet de freinage.

5. Système de store selon l'une des revendications précédentes, **caractérisé par le fait que** l'élément coulissant (10) présente, perpendiculairement à la direction de fermeture (12) du rideau (13), un axe de rotation (11) autour duquel un couple de rotation (17a) agit suite à la force de rappel (16a) dudit rideau, de sorte que, lorsque ledit rideau est libéré en vue de l'enroulement, la surface de freinage (15) est poussée contre la surface complémentaire du rail de guidage (22) avec laquelle elle entre en interaction de freinage.

6. Système de store selon la revendication 5, **caractérisé par le fait que** l'axe de rotation (11) de l'élément coulissant (10) est parallèle à l'arbre enrouleur (13a) sur lequel le rideau (13) peut être enroulé.

7. Système de store selon la revendication 5 ou 6, **ca-**

**ractérisé par le fait que** l'élément coulissant (10) possède au moins deux surfaces de freinage (15) agencées diamétralement vis-à-vis de l'axe de rotation (11).

8. Système de store selon les revendications 5 à 7, **caractérisé par le fait que** ledit système de store est conçu de façon telle que la traction exercée sur la poignée (19) dans la direction de fermeture (12) se traduise par l'imposition, à l'élément coulissant (10), d'un couple de rotation (17b) contrecarrant le couple de rotation (17a) résultant de la force de rappel (16a) du rideau (13).

9. Système de store selon l'une des revendications précédentes, **caractérisé par le fait que** la surface de freinage (15) est matérialisée, au moins en partie, par la surface de glissement de l'élément coulissant (10) qui est guidée dans le rail de guidage (22).

10. Système de store selon l'une des revendications 1 à 8, **caractérisé par le fait que** le rail de guidage (22) présente une piste de guidage dans laquelle l'élément coulissant (10) est monté à coulissement ; et la surface complémentaire dudit rail de guidage, avec laquelle la surface de freinage (15) entre en interaction de freinage, est disposée à l'extérieur de ladite piste de guidage.

11. Système de store selon l'une des revendications 1 à 4, **caractérisé par le fait que** l'élément coulissant (10) comprend une pièce de retenue (28) et une coiffe de glissement (26), sachant que ladite pièce de retenue est en liaison avec le rideau (13), la coiffe de glissement étant montée à coulissement sur ladite pièce de retenue, parallèlement à la direction d'extraction dudit rideau, et ladite coiffe de glissement étant munie de la surface de freinage (15) prévue au minimum, sur au moins un côté affecté au rail de guidage (22) ; et sachant que, lorsque le rideau est libéré en vue de l'enroulement, la pièce de retenue et la coiffe de glissement sont animées d'un coulissement mutuel sous l'effet de la force de rappel (16a) dudit rideau, transversalement par rapport à la direction de coulissement dudit rideau, le long d'au moins une surface commune de glissement (29), de sorte que la surface de freinage (15) est poussée contre la surface complémentaire dudit rail de guidage (22), avec laquelle elle entre en interaction de freinage.

12. Système de store selon la revendication 11, **caractérisé par le fait que** la surface commune de glissement (29), prévue au minimum, est formée par au moins un flanc incliné (29a) de la pièce de retenue (28) et par au moins un flanc incliné (29b) de la coiffe de glissement (26) ; et est constituée de surfaces individuelles sensiblement planes décrivant, avec la direction de coulissement du rideau (13), un angle compris entre 10° et 80°.

13. Système de store selon la revendication 12, **caractérisé par le fait que** la surface de glissement (29) prévue au minimum décrit, avec la direction de coulissement du rideau (13), un angle compris entre 30° et 60°.

14. Système de store selon la revendication 12 ou 13, **caractérisé par le fait que** les flancs inclinés (29a) de la pièce de retenue (28) sont orientés en direction de l'arbre enrouleur (13a), et les flancs inclinés (29b) de la coiffe de glissement (26) sont orientés dans la direction d'extraction du rideau (13).

15. Système de store selon l'une des revendications 12 à 14 **caractérisé par le fait que** la pièce de retenue (28) et la coiffe de glissement (26) possèdent une surface du type dents de scie le long de la direction de coulissement du rideau (13), les dents de ladite pièce de retenue et de ladite coiffe de glissement étant respectivement matérialisées par des flancs sensiblement verticaux (30a, b), ainsi que par les flancs inclinés (29a, b).

16. Système de store selon l'une des revendications 11 à 15, **caractérisé par le fait que** la pièce de retenue (28) est insérée dans la coiffe de glissement (26) et, lorsque ces deux organes accomplissent un coulissement mutuel, ladite pièce de retenue déforme élastiquement ladite coiffe de glissement vers l'extérieur, en décrivant un angle vis-à-vis de la direction de coulissement, de telle sorte que la surface de freinage (15) de l'élément coulissant (10), façonnée sur ladite coiffe de glissement, entre en interaction de freinage avec le rail de guidage (22).

17. Système de store selon l'une des revendications 11 à 16, **caractérisé par le fait que** la poignée (19) est reliée à la coiffe de glissement (26).

18. Système de store selon l'une des revendications 1 à 4, **caractérisé par le fait que** l'élément coulissant (10) est composé d'un corps de glissement (42) relié au rideau (13), ainsi que d'un corps distinct de freinage (40) interposé entre ledit corps de glissement et ledit rideau ; sachant que ledit corps de freinage porte la surface de freinage (15) prévue au minimum, et que ledit corps de glissement (42) possède un appendice cunéiforme (43) pointant en direction dudit corps de freinage (40), ledit corps de freinage étant muni d'une encoche (41) sur laquelle ledit appendice vient se placer lors de l'enroulement du rideau, de sorte que ledit corps de freinage est écarté élastiquement et que la surface de freinage (15), prévue au minimum, entre en interaction de freinage avec le rail de guidage.

**19.** Système de store selon la revendication 18, **caractérisé par le fait que** le corps de glissement et le corps de freinage sont solidarisés par l'intermédiaire d'un organe d'entraînement (44), de telle sorte que ledit corps de freinage puisse être éloigné dudit corps de glissement, jusqu'à une butée (46) dudit organe d'entraînement, parallèlement à la direction de mouvement de l'élément coulissant.

FIG. 1

FIG. 2

FIG. 3

FIG. 4

FIG. 5

12

31

28  29

10

26

FIG. 6

FIG. 7

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 10245929 A1
- DE 10248958 A1

- WO 9413923 A